# DEMANDE DE BREVET EUROPEEN

(11) **EP 0 541 415 A1**
(43) Date de publication de la demande: **12.05.1993**
(21) Numéro de dépôt: 92402838.4
(22) Date de dépôt: 16.10.1992
(51) Int. Cl.: F16K 21/12

(54) **Robinet mitigeur à fermeture temporisée**

(30) Priorité: 08.11.1991 FR 9113830
(71) Demandeur: ROBINETTERIE BINE, Société Anonyme, F-75010 Paris (FR)
(72) Inventeur: Chardon, Alain, F-75012 Paris (FR)
(74) Mandataire: Derambure, Christian

(57) **Abrégé**

L'invention concerne un robinet à fermeture temporisée comportant dans un corps (10) une entrée d'eau froide, une entrée d'eau chaude et une sortie (14), un obturateur rotatif (16) entre les entrées (12) et une sortie de l'obturateur, une valve (28, 30) entre la sortie de l'obturateur et la sortie (14) du robinet, une chambre de temporisation (32) et une tête de commande (50) entraînant en rotation l'obturateur (16) et en translation axiale un clapet de décompression (36) de la chambre de temporisation (32).

Certains organes du robinet sont verrouillés axialement à l'intérieur du corps au moyen d'une vis (22) solidarisant une bague de fermeture (62) au corps. La tête de commande (50) comprend un volant (64) à l'extérieur du corps et présentant une jupe (66) recouvrant partiellement le corps.

Selon l'invention, la vis (22) fait également office de butée pour limiter angulairement la rotation de la tête de commande (50).

## Description

La présente invention concerne un robinet mitigeur à fermeture temporisée tel que généralement utilisé dans les douches de collectivité. Un tel robinet comporte de manière générale dans un corps une entrée d'eau froide, une entrée d'eau chaude et une sortie, un obturateur rotatif entre les entrées d'eau et la sortie de l'obturateur, une valve entre la sortie de l'obturateur et la sortie du robinet, une chambre de temporisation et une tête de commande entraînant une rotation de l'obturateur et en translation axiale un clapet de décompression de la chambre de temporisation.

Certains organes du robinet sont verrouillés axialement à l'intérieur du corps au moyen d'une vis solidarisant une bague de fermeture au corps. La tête de commande comprend un volant à l'extérieur du corps et présente une jupe recouvrant partiellement le corps.

Le document FR-A-2 657 410 par exemple décrit un tel robinet mitigeur à fermeture temporisée. Toutefois ce robinet est de réalisation complexe et un robinet de structure plus simple et moins coûteux est vivement souhaitable. En outre le mouvement de translation axiale à imprimer au bouton de commande pour mettre en service le robinet présente une course importante qu'il est souhaitable de limiter. De plus la force à appliquer axialement sur la tête de commande pour ouvrir le robinet est importante car elle doit vaincre la pression régnant dans la chambre de temporisation.

En outre, il est nécessaire qu'un utilisateur ne puisse pas s'ébouillanter lors d'une mise en service rapide d'un tel robinet. De ce fait, on a coutume de limiter angulairement la rotation de la tête de commande pour qu'une ouverture de la seule arrivée d'eau chaude ne soit pas possible.

Selon le document précité, sont utilisées deux butées fixes et une languette mobile, une vis plus ou moins enfoncée dans une des butées permettant un ajustage de l'amplitude de la rotation de la tête de commande.

Or, il est souhaitable dans la pratique de pouvoir régler cette amplitude sur une plus grande gamme possible et, notamment, en fonction de la température d'arrivée de l'eau chaude.

La présente invention a pour but d'obvier à ces inconvénients au moyen d'un robinet mitigeur à fermeture temporisée qui soit fiable et de faible coût à fabriquer.

Selon l'invention, la jupe de la tête de commande porte une excroissance faisant saillie susceptible de venir en butée sur la vis, une partie intérieure du volant est crantée et coopère avec un axe cranté de façon correspondante pour transmettre le mouvement de rotation aux organes du robinet, et l'axe cranté présente une languette faisant saillie vers l'extérieur et susceptible de venir en butée sur la vis.

De préférence, la partie de l'axe cranté pénétrant à l'intérieur du corps présente en coupe radiale une forme telle que l'axe ait une unique position angulaire déterminée par rapport à une bague de liaison faisant partie des organes, tout en étant susceptible de coulisser axialement dans cette bague de liaison.

La bague de liaison présente favorablement une paroi radiale formant butée axiale pour l'axe cranté, et qui est percée d'un orifice susceptible d'être obturé au repos par le clapet de décompression qui est solidaire de l'axe cranté et présente un épaulement radial portant un joint d'étanchéité, cet épaulement formant seconde butée axiale pour l'axe cranté.

Généralement, on dispose un ressort de rappel entre la paroi radiale de la bague de liaison et l'axe cranté tendant à obturer au repos l'orifice percé dans la paroi radiale de la bague de liaison. Une extrémité du clapet est filetée et est solidarisée à l'axe cranté par l'intermédiaire d'un écrou de liaison taraudé. Volant et axe crantés sont alors verrouillés ensemble après assemblage au moyen d'un arbre fileté coopérant avec cet écrou de liaison taraudé.

Selon un autre aspect de l'invention, le robinet mitigeur comprend un manchon cylindrique solidaire de la bague de liaison et qui constitue, d'une part, l'obturateur et, d'autre part, un siège pour la valve disposée entre la sortie de l'obturateur et la sortie du robinet et dont le clapet est formé sur un piston susceptible de coulisser dans le manchon. Une chambre annulaire est définie entre une face du piston et le manchon et connectée à la sortie de l'obturateur. La chambre de temporisation est définie entre une autre face du piston et la paroi radiale de la bague de liaison et enferme le ressort de rappel. Une restriction est ménagée dans le piston entre la chambre annulaire et la chambre de temporisation.

De préférence, le clapet de la valve disposée entre la sortie de l'obturateur et la sortie du robinet est constitué par un prolongement de la face du piston en regard de la chambre annulaire. Des passages sont ménagés entre le prolongement et le manchon, et un joint d'étanchéité assure l'étanchéité de la valve au repos. Ainsi le prolongement peut assurer, en outre, une fonction de guidage axial du piston. Enfin la restriction comporte une partie radiale en forme de U dont les branches parallèles sont élargies de manière à pièger les impuretés portées par l'eau d'arrivée.

La présente invention sera mieux comprise et d'autres buts, avantages et caractéristiques de celles-ci apparaîtront plus clairement à la lecture de la description qui suit d'un mode de réalisation donnée à titre non limitatif et à laquelle est jointe une planche de dessin sur laquelle :
La Figure 1 représente schématiquement en coupe axiale rabattue un robinet mitigeur conforme à la présente invention, et
La Figure 2 représente schématiquement en coupe radiale une bague de liaison telle que celle mise en oeuvre dans le robinet représenté Figure 1.

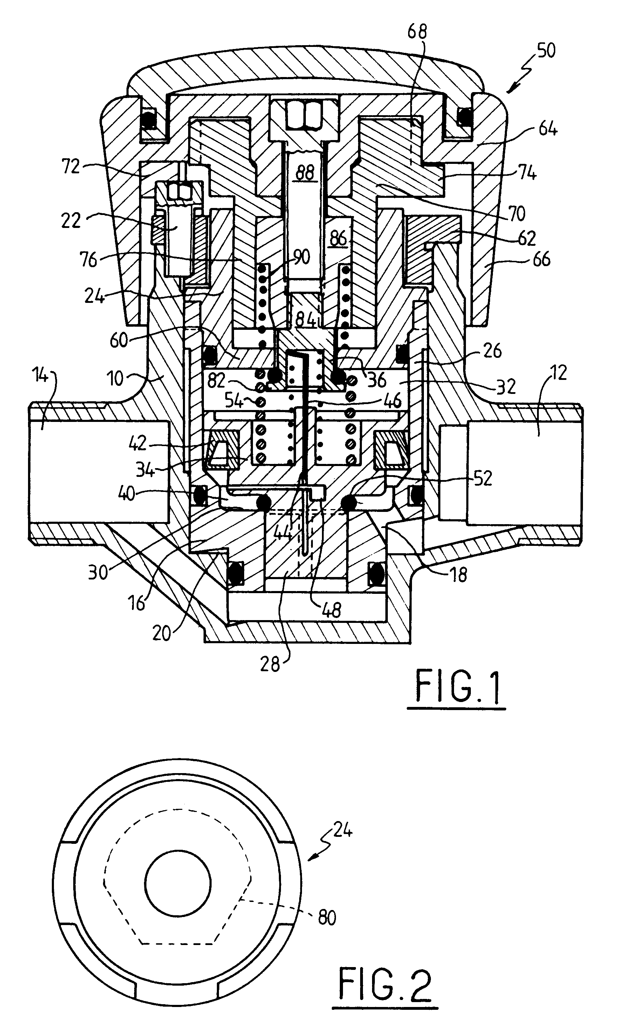

En référence maintenant aux Figures, le robinet mitigeur comporte un corps 10. Pour des raisons de clarté, la coupe du robinet de la Figure 1 a été prise selon deux plans perpendiculaires pour permettre la représentation d'une entrée d'eau 12 et de la sortie 14 du robinet. De façon générale, les deux entrées d'eau sont sensiblement alignées, la sortie du robinet étant perpendiculaire aux deux entrées.

Un obturateur rotatif 16 est disposé dans le corps du robinet. Cet obturateur rotatif étant de réalisation classique, il ne sera pas décrit plus avant ici. Il comporte une rampe 18 dans sa partie latérale dont la hauteur passe de zéro à une valeur maximale déterminée permettant d'assurer la fonction de mélange des eaux arrivant de chacun des conduits en fonction de la position angulaire de l'obturateur rotatif 16. Cet obturateur rotatif est, en pratique, constitué par un manchon cylindrique fixe en translation axiale dans le corps 10 du robinet. Un épaulement 20 de la paroi interne du robinet est prévu à cet effet, le manchon venant en butée contre cet épaulement et étant verrouillé en translation axiale au moyen d'une vis 22, d'une bague de liaison 24 et de la bague de fermeture 62.

Le manchon cylindrique 26 forme dans son extrémité un siège pour la valve disposée entre la sortie de l'obturateur rotatif et la sortie du robinet. Le clapet 28 de cette valve est constitué par un prolongement d'un piston susceptible de coulisser dans le manchon 26. Ce clapet porte un joint d'étanchéité 52 assurant l'étanchéité de la valve au repos lorsque le clapet 28 porte sur le siège 30 ménagé à cet effet sur le manchon 26. Des passages sont ménagés entre ce prolongement 28 et le manchon 26. Ce prolongement 28 affectera favorablement en section radiale la forme d'une croix ou équivalent.

Une chambre de temporisation 32 est définie entre une face du piston 34 et le manchon 26, ce manchon étant en outre fermé par la paroi radiale 60 de la bague de liaison 24. Cette chambre de temporisation 32 enferme un ressort 54 de rappel du piston au repos. Un clapet de décompression 36 ferme un orifice ménagé dans la bague de liaison 24 et relié à la pression atmosphérique.

Une chambre annulaire 40 est ménagée entre l'autre face du piston et le manchon cylindrique 26. Cette chambre annulaire 40 constitue la sortie de l'obturateur rotatif 16. Un joint d'étanchéité 42, par exemple du type à lèvre, assure l'étanchéité entre la chambre annulaire 40 et la chambre de temporisation 32.

Une restriction 44, 48 est pratiquée dans le piston 34 pour assurer une communication entre la chambre annulaire 40 et la chambre de temporisation 32. Cette restriction 44, 48 comporte une partie axiale 44 dont une aiguille 46 assure l'auto-nettoyage communiquant avec la chambre de temporisation 32. Cette partie axiale 44 communique également avec une partie radiale 48 en forme de U dont les branches parallèles sont élargies de manière à pièger les impuretés portées par l'eau.

Le fonctionnement du robinet est le suivant : au repos l'obturateur rotatif 16 ayant une position angulaire déterminée, l'eau en provenance des conduits 12 pénètre dans la chambre annulaire 40. Au repos également, la chambre de temporisation 32 est remplie d'eau et forme ainsi un mur hydraulique pour le piston 34. Le piston 34 est alors dans sa position de repos, la valve entre la sortie de l'obturateur rotatif et la sortie du robinet étant alors fermée puisque le joint d'étanchéité 52 ferme l'accès à la sortie du robinet, le piston étant dans la position basse, comme représenté sur la Figure 1. Lorsque l'on appuie sur la tête de commande 50, un mouvement de translation est imprimé au clapet 36 qui s'ouvre, l'eau contenue dans la chambre de temporisation 32 passant alors à l'air libre par l'orifice ménagé dans la paroi 60 de la bague de liaison 24. La pression de l'eau d'arrivée dans la chambre annulaire 40 imprime à son tour un mouvement de translation au piston 34 qui monte (sur la Figure 1) à l'encontre de la force exercée par le ressort 54, ouvrant ainsi le clapet formé par le prolongement 28 du piston. La chambre annulaire 40 est ainsi reliée directement à la sortie 14 du robinet. Dans le même temps, l'eau contenue dans la chambre annulaire 40, sous l'effet de la pression, passe par la restriction 44, 48 vers la chambre de temporisation 32 qui se remplit alors à nouveau doucement. Les impuretés de calibre important portées par l'eau sont alors naturellement piégées dans la partie radiale 48 de la restriction. La pression dans la chambre de temporisation et le ressort de rappel 54 vont déplacer le piston 34 dans le sens de la fermeture de la valve au fur et à mesure du remplissage de la chambre de temporisation 32, le clapet 28 venant se reposer à nouveau sur son siège 30.

Comme on vient de le voir, certains organes internes du corps, tels que le manchon cylindrique 26 et la bague de liaison 24, sont fixes en translation axiale lors de la commande du robinet, mais ils sont susceptibles de rotation pour le choix de la température de sortie de l'eau du robinet. La translation axiale est donc interdite par une bague de fermeture 62 solidarisée au corps 10 au moyen de la vis 22 et formant butée axiale pour la bague de liaison 24.

La tête de commande 50 de ce robinet comprend un volant 64 que l'utilisateur devra manoeuvrer en rotation pour choisir la température de l'eau de sortie. Ce volant 64, situé à l'extérieur du corps 10 pour pouvoir être facilement manoeuvré, présente une jupe 66 recouvrant partiellement le corps 10 et ayant d'abord un rôle esthétique.

Une partie intérieure 68 du volant 64 est crantée et coopère avec un axe 70 qui est cranté de façon correspondante pour pouvoir transmettre le mouvement de rotation imprimé au volant 64 à la bague de liaison 24.

Pour limiter le mouvement de rotation, on prévoit à l'intérieur de la jupe 66 une excroissance 72 faisant saillie de la jupe et, sur l'axe cranté 70, une languette 74 faisant saillie de cet axe cranté 70, toutes deux étant susceptibles de venir en butée contre la vis 22 lors d'une rotation du volant 64.

Pour assurer la transmission du mouvement de rotation et la biunivocité de la position angulaire relative entre le volant 64 et l'axe cranté 70 et de la position angulaire de l'obturateur rotatif 16, la partie 76 de l'axe cranté 70 pénétrant dans le corps 10 présente, en coupe radiale, une forme spécifique coopérant avec la forme spécifique de la bague de liaison 24.

On a représenté schématiquement en coupe radiale la bague de liaison 24 Figure 2. On voit, en tirets 80, un exemple d'une telle forme spécifique.

Ce crabotage permet à l'axe cranté 70 de pouvoir coulisser axialement librement dans la bague 24, ce coulissement étant toutefois limité de part et d'autre par la paroi radiale 60 de la bague de liaison 24 et par un épaulement 82 prévu sur le clapet 36.

Une extrémité 84 du clapet 36 est filetée de manière à coopérer avec un écrou de liaison taraudé 86, lequel coopère favorablement avec un arbre fileté 88 verrouillant l'ensemble constitué par le volant 64 et l'axe cranté 70.

Un ressort de rappel disposé entre l'axe cranté 76, par exemple par l'intermédiaire de l'écrou de liaison 86 comme représenté Figure 1, et la paroi radiale 60 de la bague de liaison 24 tend à maintenir fermé le clapet 36 au repos et à remettre la tête de commande 50 en position haute (sur la Figure 1) juste après manoeuvre du robinet.

On voit ainsi que l'on a obtenu un robinet extrêmement simple pouvant être commandé en appuyant sur la tête de commande 50 légèrement et sans course importante.

En outre, ce robinet permet un réglage angulaire simple et biunivoque des organes pour obtenir la température maximale souhaitée de l'eau en sortie, ce réglage pouvant être effectué par un technicien sur le site lors de la mise en place du robinet. Enfin ce robinet peut être assemblé de façon extrêmement simple et rapide.

Bien que seul un mode préféré de réalisation de l'invention ait été décrit et représenté, il est évident que l'homme du métier pourra y apporter de nombreuses modifications sans sortir du cadre de l'invention.

## Revendications

1. Robinet mitigeur à fermeture temporisée comportant dans un corps (10) une entrée d'eau froide, une entrée d'eau chaude et une sortie (14), un obturateur rotatif (16) entre lesdites entrées (12) et une sortie dudit obturateur, une valve (28, 30) entre ladite sortie de l'obturateur et la sortie (14) du robinet, une chambre de temporisation (32) et une tête de commande (50) entraînant en rotation limitée ledit obturateur (16) et en translation axiale un clapet de décompression (36) de ladite chambre de temporisation (32), certains organes dudit robinet étant verrouillés axialement à l'intérieur dudit corps (10) au moyen d'une vis (22) solidarisant une bague de fermeture (62) audit corps (10), ladite tête de commande (50) comprenant un volant (64) à l'extérieur dudit corps et présentant une jupe (66) recouvrant partiellement ledit corps (10), caractérisé en ce que ladite jupe (66) porte une excroissance (72) faisant saillie susceptible de venir en butée sur ladite vis (22), qu'une partie intérieure (68) dudit volant (64) est crantée et coopère avec un axe cranté (70) de façon correspondante pour transmettre le mouvement de rotation aux dits organes, et que ledit axe cranté (70) présente une languette (74) faisant saillie vers l'extérieur et susceptible de venir en butée sur ladite vis (22).

2. Robinet mitigeur selon la revendication 1, caractérisé en ce qu'une partie (76) dudit axe cranté (70) pénétrant à l'intérieur dudit corps (10) présente en coupe radiale une forme telle (80) que ledit axe cranté (70) ait une unique position angulaire déterminée par rapport à une bague de liaison (24) faisant partie des dits organes tout en étant susceptible de coulisser axialement dans ladite bague de liaison (24).

3. Robinet mitigeur selon la revendication 2, caractérisé en ce que ladite bague de liaison (24) présente une paroi radiale (60) formant butée axiale pour ledit axe crante (76).

4. Robinet mitigeur selon la revendication 3, caractérisé en ce que ladite paroi radiale (60) est percée d'un orifice susceptible d'être obturé au repos par ledit clapet de décompression (36) qui est solidaire dudit axe cranté (76) et présente un épaulement radial (82) portant un joint d'étanchéité, ledit épaulement (82) formant seconde butée axiale pour ledit axe cranté (76).

5. Robinet mitigeur selon la revendication 4, caractérisé en ce que le ressort de rappel (70) est logé entre ladite paroi radiale (60) de la bague de liaison (24) et ledit axe crante (76) et tend à obturer au repos ledit orifice perce dans la paroi radiale (60) de ladite bague de liaison (76).

6. Robinet mitigeur selon la revendication 5, caractérisé en ce qu'une extrémité (84) dudit clapet (36) est filetée et est solidarisée audit axe cranté (76) par l'intermédiaire d'un écrou de liaison taraudé (86).

7. Robinet mitigeur selon la revendication 6, caractérisé en ce que le volant (64) et l'axe cranté (76) sont verrouillés ensemble après assemblage au moyen d'un arbre fileté (88) coopérant avec ledit écrou de liaison taraudé (86).

8. Robinet mitigeur selon la revendication 7, caractérisé en ce qu'un manchon cylindrique (26) solidaire de ladite bague de liaison constitue, d'une part, ledit obturateur (16) et, d'autre part, un siège (30) pour ladite valve dont le clapet est forme sur un piston (34) susceptible de coulisser dans ledit manchon (26), une chambre annulaire (40) étant définie entre une face dudit piston (34) et ledit manchon (26) et étant connectée à ladite sortie de l'obturateur, la chambre de temporisation (32) étant définie entre une autre face dudit piston (34) et ladite paroi radiale de ladite bague de liaison et enfermant un ressort de rappel (54), une restriction (44) étant ménagée dans ledit piston (34) entre ladite chambre annulaire (40) et ladite chambre de temporisation (32).

9. Robinet mitigeur selon la revendication 8, caractérisé en ce que ledit manchon (26) est fixe en translation axiale.

10. Robinet mitigeur selon la revendication 9, caractérisé en ce que le clapet de ladite valve est constitué par un prolongement (28) de la face dudit piston (34) en regard de ladite chambre annulaire (40), des passages étant ménages entre ledit prolongement (28) et ledit manchon (26), un joint d'étanchéité (52) assurant l'étanchéité de ladite valve au repos.

11. robinet mitigeur selon la revendication 10, caractérisé en ce que ledit prolongement (28) assure en outre une fonction de guidage axial dudit piston (34).

12. Robinet mitigeur selon l'une quelconque des revendications 8 à 11, caractérisé en ce que ladite restriction comporte une partie axiale (44) et une partie radiale (48) communiquant l'un avec l'autre.

13. Robinet mitigeur selon la revendication 12, caractérisé en ce que la partie radiale (48) affecte une forme en U dont les branches parallèles sont élargies pour pièger les impuretés.
